# EUROPEAN PATENT APPLICATION

(11) **EP 4 700 953 A1**
(43) Date of publication of application: **25.02.2026**
(21) Application number: 23933277.8
(22) Date of filing: 21.04.2023
(51) Int. Cl.: H01M 50/367, H01M 50/35

(54) **BATTERY PACK AND CONTROL DEVICE FOR BATTERY PACK**

(71) Applicant: Nissan Motor Co., Ltd., Kanagawa 221-0023 (JP)
(72) Inventor: MURATA, Michitomo, Atsugi-shi, Kanagawa 243-0123 (JP); NAKAGAWA, Takuya, Atsugi-shi, Kanagawa 243-0123 (JP); IRIE, Akira, Atsugi-shi, Kanagawa 243-0123 (JP); UENO, Shota, Atsugi-shi, Kanagawa 243-0123 (JP)
(74) Representative: Global IP Europe Patentanwaltskanzlei
(86) International application number: PCT/JP2023/015971
(87) International publication number: WO 2024/218972

(57) **Abstract**

The battery pack including: a housing; a battery module accommodated in the housing and implemented by stacking a plurality of cells; a gas duct including a passage part disposed to cover an upper surface of the battery module, extending in a stacking direction, and configured to guide a gas in the stacking direction when the gas is generated from the cells, and a discharge part connected downstream of the passage part and configured to guide the gas to outside; and a temperature sensor disposed at the downstream end of the passage part and configured to detect a temperature of the gas flowing in the discharge part.

## Description

### TECHNICAL FIELD

The present invention relates to a battery pack and a control device for the battery pack.

### BACKGROUND ART

In a battery pack in which a battery module including a plurality of cells is accommodated in a case, when a problem of a thermal chain in which the plurality of cells generate heat in a chained manner occurs, it is required to detect the problem and notify a user or the like of the problem.

### SUMMARY OF INVENTION

### PROBLEM TO BE SOLVED BY THE INVENTION

The technique described in JP2021-150033A discloses a configuration in which a gas discharge valve that opens when an internal pressure of the battery pack is higher than a predetermined pressure is provided, and a thermal chain is detected when a gas is discharged. In such a configuration, since an occurrence of the thermal chain cannot be detected for each battery module in the battery pack, there is a problem that the occurrence of the thermal chain cannot be appropriately detected.

The present invention has been made in view of such a problem, and an object thereof is to provide a battery pack capable of detecting a thermal chain of a cell for each battery module and a control device for the battery pack.

### MEANS FOR SOLVING THE PROBLEM

An embodiment of the present invention is applied to a battery pack. The battery pack including: a housing; a battery module accommodated in the housing and implemented by stacking a plurality of cells; a gas duct including a passage part disposed to cover an upper surface of the battery module, extending in a stacking direction, and configured to guide a gas in the stacking direction when the gas is generated from the cells, and a discharge part connected downstream of the passage part and configured to guide the gas to outside; and a temperature sensor disposed at the downstream end of the passage part and configured to detect a temperature of the gas flowing in the discharge part.

### EFFECT OF THE INVENTION

According to the present invention, since the temperature sensor is provided at the downstream end of the passage part of the gas duct disposed in the battery module, when a high-temperature gas is generated from the cell due to a thermal chain, a temperature rise caused by the gas can be detected by the temperature sensor. Accordingly, the occurrence of the thermal chain can be detected for each battery module at an earlier stage than in the related art.

### BRIEF DESCRIPTION OF DRAWINGS

[FIG. 1] FIG. 1 is a configuration diagram of a thermal chain detection system according to an embodiment of the present invention.
[FIG. 2] FIG. 2 is a perspective view of a battery module.
[FIG. 3] FIG. 3 is a longitudinal sectional view of the battery module.
[FIG. 4] FIG. 4 is a longitudinal sectional view of a main part of a gas duct.
[FIG. 5] FIG. 5 is a flowchart of thermal chain detection processing by a controller.
[FIG. 6] FIG. 6 is a diagram illustrating a temperature rise when a thermal chain occurs.

### DESCRIPTION OF EMBODIMENTS

Hereinafter, embodiments of the present invention will be described with reference to the drawings.

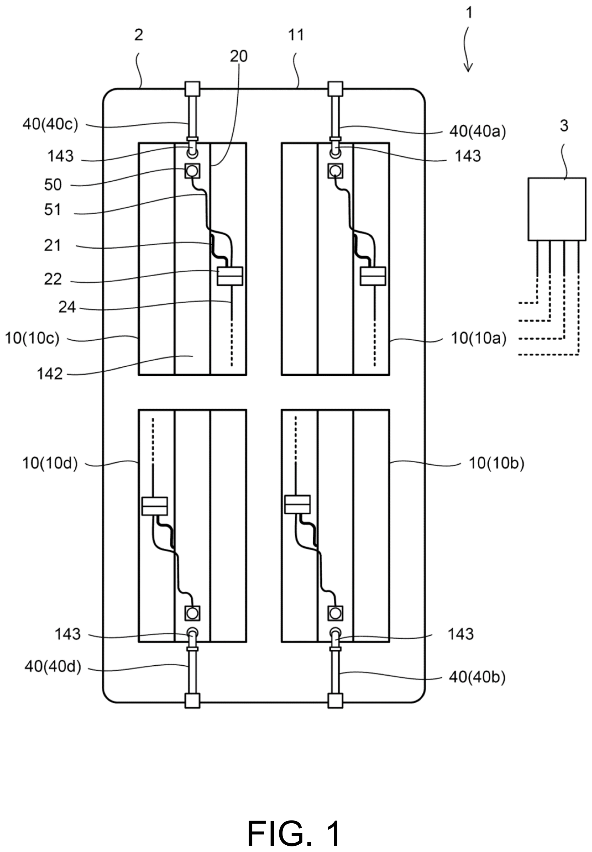

FIG. 1 is a configuration diagram of a battery control system 1 of a battery pack 2 according to an embodiment of the present invention.

As illustrated in FIG. 1, the battery control system 1 includes a battery pack 2 and a controller 3 that controls an operation of the battery pack 2. The battery control system 1 is mounted on, for example, an electric vehicle or a hybrid vehicle.

The battery pack 2 includes a housing 11 and a plurality of battery modules 10 accommodated in the housing 11. FIG. 1 illustrates an example in which four battery modules 10 (10a, 10b, 10c, 10d) are accommodated in the housing 11.

The housing 11 is sealed from an outside air. Accordingly, intrusion of rainwater and dust into the battery pack 2 is suppressed. In order to cool the battery module 10 in the battery pack 2, a cold air may be sent into the battery pack 2.

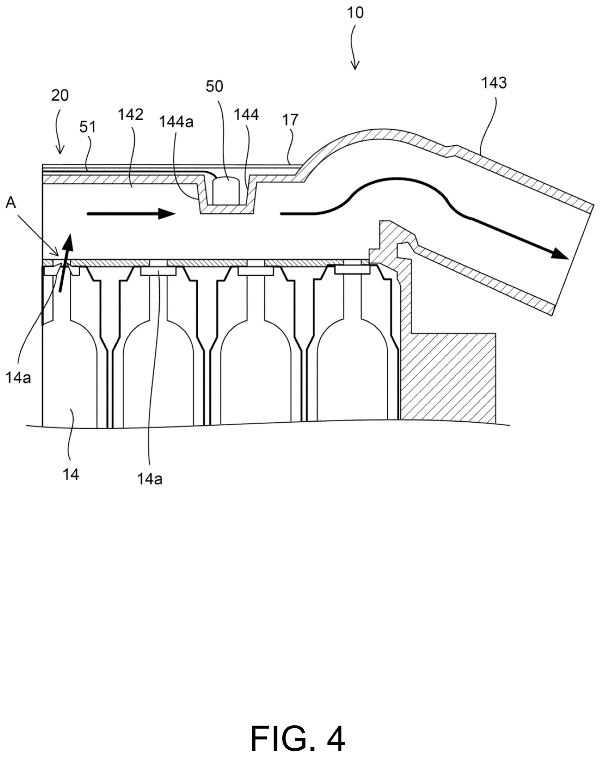

As will be described later with reference to FIG. 4, the battery module 10 is implemented by stacking cells 14 in a row in a longitudinal direction (left-right direction in FIG. 4). In the example illustrated in FIG. 4, 24 battery cells are stacked in one battery module 10. Each cell 14 includes a secondary battery such as a lithium ion battery.

Each battery module 10 includes a gas duct 20 including a passage part 142 and a discharge part 143 on an upper surface thereof. A gas pipe 40 is connected to the discharge part 143. In the battery module 10, when a gas is generated from the cell 14 during an abnormality such as a thermal chain, the gas is discharged to outside of the battery pack 2 through the gas duct 20 and the gas pipe 40.

In the example illustrated in FIG. 1, a gas pipe 40a is connected to the discharge part 143 of the battery module 10a. Similarly, a gas pipe 40b is connected to the discharge part 143 of the battery module 10b, a gas pipe 40c is connected to the discharge part 143 of the battery module 10c, and a gas pipe 40d is connected to the discharge part 143 of the battery module 10d. The gas pipe 40 (40a, 40b, 40c, 40d) communicates with the outside of the housing 11.

In this way, since the gas pipe 40 is connected to the battery module 10, when a gas is generated by the thermal chain, the gas is discharged to the outside of the battery pack 2. Therefore, even when a gas is generated in the battery module 10, it is possible to prevent an internal pressure of the battery pack 2, which is a sealed structure, from becoming higher than necessary.

Here, the thermal chain of the cells 14 will be described. In a configuration in which the plurality of cells 14 are stacked and accommodated as in the battery pack 2, when an abnormality such as a short circuit occurs in the cell 14 and the cell 14 generates heat, a gas is generated inside the cell 14 and expands. Further, when the heat of the cell 14 is transmitted to another adjacent cell 14, heat generation of the cell 14 and gas generation may occur in a chained manner. Therefore, a vehicle equipped with the battery pack 2 is required to detect the occurrence of the thermal chain early and accurately.

In a battery pack in the related art, a gas is discharged to the outside when the internal pressure of the battery pack becomes large, and a thermal chain is detected in response to the discharge of the gas. In such a configuration, it is impossible to detect a thermal chain for each battery module. Further, there is a problem that it takes time until the pressure of the entire battery pack rises, and thus it is difficult to detect the occurrence of the thermal chain at an early stage.

In the present embodiment, the occurrence of the thermal chain is detected earlier by the following configuration.

A temperature sensor 50 that detects a temperature of the gas passing through the passage part 142 of the gas duct 20 is provided on an upper surface of one end portion of the passage part 142 of the battery module 10. The temperature sensor 50 is implemented by, for example, a thermistor element.

Each battery module 10 includes a voltage sensor harness 21 connected to a voltage sensor (not illustrated) that detects a voltage of the cell 14, and a temperature sensor harness 51 connected to the temperature sensor 50. A connector 22 is provided at an end portion of each of the voltage sensor harness 21 and the temperature sensor harness 51. A controller-side harness 24 connected to the controller 3 is connected to the connector 22.

Although not illustrated, each battery module 10 is also provided with a high-voltage harness for transmitting and receiving electric power to and from a load outside the battery pack 2.

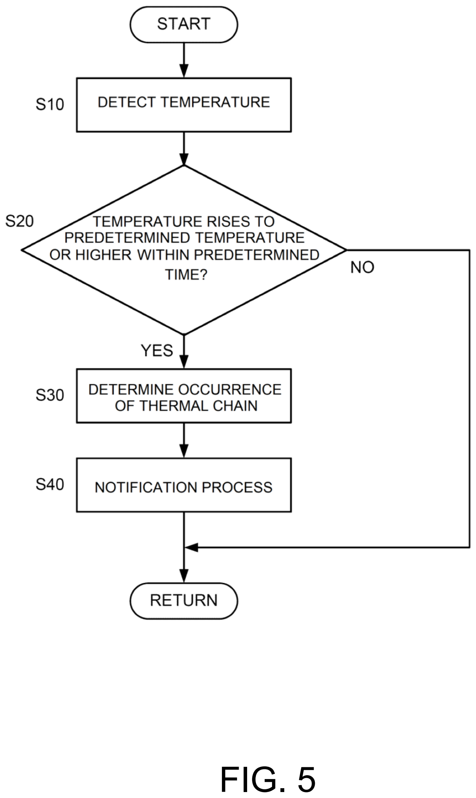

The controller 3 includes a microcomputer and a memory, and executes thermal chain detection processing described with reference to FIG. 5 by the microcomputer executing a program stored in the memory.

The controller 3 receives signals from the voltage sensor and the temperature sensor 50 via the controller-side harness 24, and detects the voltage of the cell 14 and the temperature of the passage part 142 of the battery module 10.

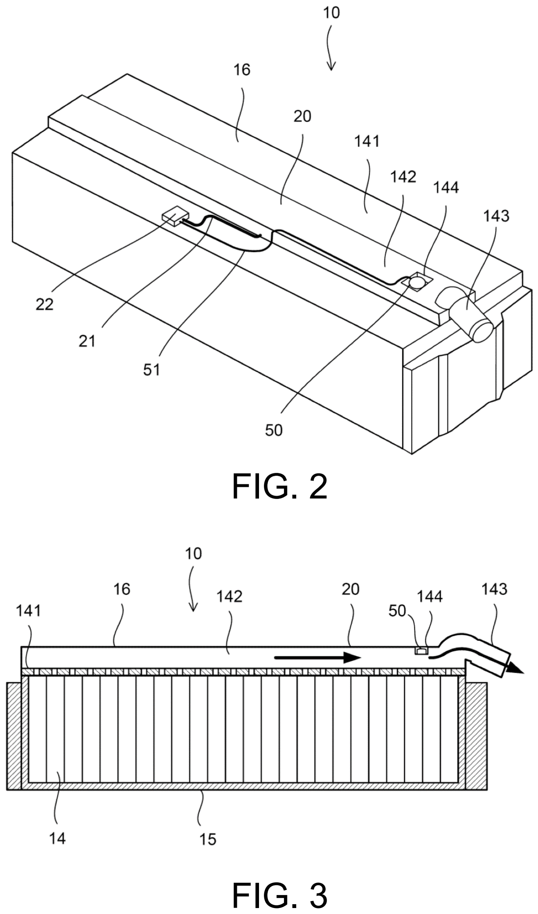

FIG. 2 is a perspective view of the battery module 10, and FIG. 3 is a longitudinal sectional view of the battery module 10.

The battery module 10 is implemented by stacking a plurality of cells 14 in the longitudinal direction. FIG. 3 illustrates an example in which 24 cells 14 are stacked, but the number of the cell 14 is not limited thereto. A periphery and a bottom surface of the stacked cells 14 are covered with a case 15. An upper surface of the cell 14 is covered with a cover 16. The case 15 and the cover 16 are made of a metal such as aluminum.

The cover 16 includes a lid 141 that covers the upper surface of the cell 14, and the passage part 142 that is formed along the longitudinal direction in a central portion of the lid 141 (central portion of cross section orthogonal to stacking direction of battery module 10). Further, the cylindrical discharge part 143 to which the gas pipe 40 is connected is provided at a downstream end in a gas flow direction, which is one end side of the passage part 142.

The discharge part 143 protrudes slightly downward from an end portion of the passage part 142 of the battery module 10. The temperature sensor 50 is provided at a downstream end of the passage part 142 and in the vicinity of the discharge part 143.

FIG. 4 is a longitudinal sectional view of a main part of the battery module 10 around the temperature sensor 50.

The passage part 142 is formed as a substantially rectangular passage having a flat upper surface and a flat side surface, and a recessed part 144 for disposing the temperature sensor 50 is formed at the downstream end in the gas flow direction. The recessed part 144 is recessed in a rectangular shape from the upper surface of the passage part 142 toward the inside of the passage part 142, and does not communicate with the inside of the passage part 142. A lower surface of the recessed part 144 is disposed at a position higher than a half of an inner diameter of the passage part 142 in a height direction so as not to affect the flow of the gas. The temperature sensor 50 is fixed in close contact with a bottom portion of the recessed part 144.

The temperature sensor harness 51 connected to the temperature sensor 50 is disposed on the upper surface of the passage part 142. As illustrated in FIG. 2, the temperature sensor harness 51 extends from the upper surface of the passage part 142 in the stacking direction, and extends from the side surface of the passage part 142 to the upper surface of the lid 141 in the middle thereof. The temperature sensor harness 51 is disposed adjacent to the voltage sensor harness 21 on the upper surface of the lid 141, and is connected to the connector 22 together with the voltage sensor harness 21. The connector 22 is a common connector for the temperature sensor harness 51 and the voltage sensor harness 21.

Although not illustrated in FIGS. 2 and 3, a resin cover 17 made of a resin is provided on the upper surface of the cover 16 so as to cover the entire cover 16, as illustrated in FIG. 4. The temperature sensor harness 51 is disposed between the upper surface of the passage part 142 and the resin cover 17.

An open valve 14a is provided on the upper surface of the cell 14. The open valve 14a is implemented such that the open valve 14a is opened as indicated by an arrow A in FIG. 4 when the cell 14 generates heat, a gas is generated inside the cell 14, and a pressure inside the cell 14 becomes equal to or higher than a predetermined pressure. When the open valve 14a is opened, the inside of the cell 14 communicates with the passage part 142, and the gas generated in the cell 14 is discharged to the passage part 142.

The gas discharged from the cell 14 is discharged to the passage part 142 of the gas duct 20. The gas discharged to the passage part 142 flows toward the discharge part 143, which is an outlet, and is discharged from the discharge part 143 to the outside of the battery pack 2 via the gas pipe 40.

The recessed part 144 of the passage part 142 protrudes toward the inside of the passage part 142. Since the recessed part 144 protrudes into the passage part 142, the gas flowing through the passage part 142 flows around the recessed part 144 while colliding with a surface 144a orthogonal to the gas flow direction, and flows toward the discharge part 143.

In this way, since the gas flows around the recessed part 144 when the gas is generated, the temperature of the gas is easily transmitted to the temperature sensor 50 disposed inside the recessed part 144, and the temperature sensor 50 can more reliably detect a temperature rise caused by the gas. Further, since the recessed part 144 is made of a metal having a relatively high thermal conductivity, the temperature rise caused by the gas is rapidly transmitted to the temperature sensor 50 through the recessed part 144.

Since the high-temperature gas passes through the gas duct 20, that is, the inside of the passage part 142 and the discharge part 143, when the temperature sensor 50 is directly disposed in the passage part 142, a component and a structure having a sufficient heat-resistant temperature are required to withstand the high-temperature gas, and there is a concern that the cost increases. On the other hand, in the present embodiment, since the temperature sensor 50 is disposed on an outer side of the gas duct 20, that is, on the upper surface of the passage part 142, the heat-resistant temperatures of the temperature sensor 50 and the temperature sensor harness 51 can be reduced, and the cost can be reduced.

FIG. 5 is a flowchart of the thermal chain detection processing to be executed by the controller 3.

This flowchart is executed in the controller 3 at predetermined intervals (for example, every 10 ms). The controller 3 executes processes illustrated in this flowchart in parallel for each of the plurality of battery modules 10 (10a, 10b, 10c, 10d) provided in the battery pack 2 as illustrated in FIG. 1.

In step S10, the controller 3 receives a signal from the temperature sensor 50 and acquires a temperature of a downstream end of the gas duct 20.

Next, in step S20, the controller 3 determines whether the temperature detected by the temperature sensor 50 rises by a predetermined temperature or higher within a predetermined time.

Specifically, the temperature detected by the temperature sensor 50 in the previous process is compared with the temperature newly detected by the temperature sensor 50 after a predetermined time (for example, 10 [ms]) from the detection of the temperature, and when a difference between the temperatures, that is, a temperature rise value is equal to or larger than the predetermined temperature (for example, 100 [°C]), it is determined that the temperature rises by the predetermined temperature or higher within the predetermined time, and the process proceeds to step S30. When the temperature does not rise by the predetermined temperature or higher within the predetermined time, the processing according to this flowchart is ended once, and the processing returns to other processes.

When the determination in step S20 is YES, it indicates that the temperature of the gas in the passage part 142 rapidly rises in a short time. In this case, in step S30, the controller 3 determines that a thermal chain of the cells 14 occurs.

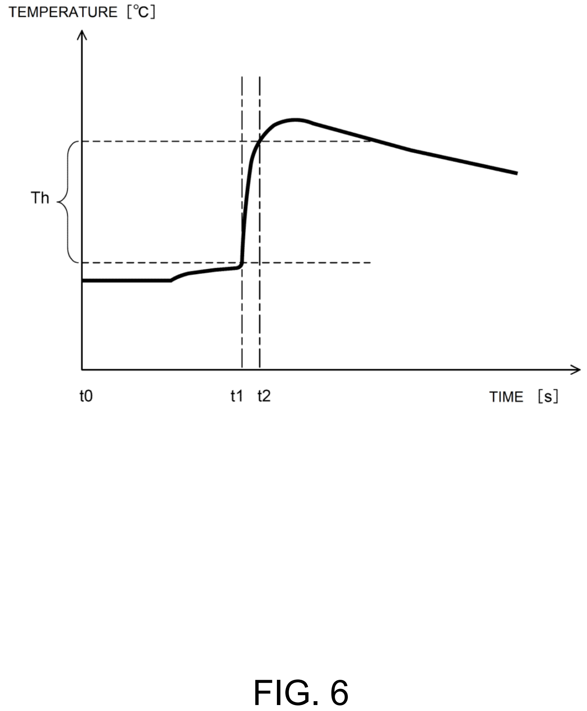

FIG. 6 is a diagram illustrating a change in the temperature detected by the temperature sensor 50 according to the present embodiment when a thermal chain occurs.

In FIG. 6, between a timing t0 and a timing t1, the temperature detected by the temperature sensor 50 does not rise by a predetermined temperature or higher within a predetermined time. In this state, the determination in step S20 is "NO".

Here, from the timing t1 to a timing t2, when the temperature rapidly rises and a temperature rise value Th becomes the predetermined temperature or higher, the controller 3 determines that the thermal chain occurs.

Next, in step S40, the controller 3 performs a notification process. The notification process is performed by, for example, notification of a warning light or a message to an instrument panel of a driver's seat, or notification of an alarm by alarm sound or voice. The notification process prompts the driver to receive the service.

After the process of step S40, the controller 3 returns to other processes.

By the processing of the flowchart illustrated in FIG. 5, it is possible to detect the thermal chain for each battery module 10, and to perform an appropriate process (notification process).

When it is detected that the thermal chain occurs, the controller 3 can notify the driver of an alarm in the notification process of step S40.

As described above, the battery pack 2 according to the present embodiment includes the housing 11, the battery module 10 accommodated in the housing 11 and implemented by stacking the plurality of cells 14, and the gas duct 20 including the passage part 142 disposed to cover an upper surface of the battery module 10, extending in a stacking direction, and guiding a gas in the stacking direction when the gas is generated from the cell 14, and the discharge part 143 connected to a downstream end of the passage part 142 and guiding the gas to outside. The temperature sensor 50 that detects a temperature of the gas flowing through the discharge part 143 is disposed at the downstream end of the passage part 142.

In this configuration, since the temperature sensor 50 is provided in the gas duct 20 of the battery module 10, when a gas is generated from the cell 14, a temperature rise caused by the gas is detected by the temperature sensor 50, so that it is possible to detect an occurrence of a thermal chain of the cells 14 for each battery module 10 more quickly as compared with the related art where an occurrence of a thermal chain is detected when an internal pressure of the entire battery pack increases. Further, since the temperature sensor 50 is disposed at the downstream end of the passage part 142 of the gas duct 20, the thermal chain can be detected even when a gas is generated in any of the cells 14 in the battery module 10.

In addition, in the present embodiment, since the temperature sensor 50 is disposed on an upper surface of the passage part 142 of the gas duct 20 and does not come into direct contact with the high-temperature gas, the heat-resistant temperature of the temperature sensor 50 can be reduced, and the cost can be reduced while maintaining the detection accuracy of the temperature.

In the present embodiment, the passage part 142 of the gas duct 20 has the recessed part 144 recessed from the upper surface toward the inside of the passage part 142 of the gas duct 20, and the temperature sensor 50 is disposed in the recessed part 144.

In this configuration, the gas flowing through the passage part 142 of the gas duct 20 flows around the recessed part 144 having the surface 144a orthogonal to a gas flow direction, so that a temperature rise caused by the gas can be more reliably detected by the temperature sensor 50.

In addition, in the present embodiment, a voltage sensor that detects a voltage of the cell 14 is provided, the voltage sensor harness 21 connected to the voltage sensor is routed in the stacking direction along the passage part 142 of the gas duct 20, and the temperature sensor harness 51 connected to the temperature sensor 50 is routed adjacent to the voltage sensor harness 21.

In this configuration, since the temperature sensor harness 51 of the temperature sensor 50 for detecting the gas temperature is routed adjacent to the existing voltage sensor harness 21 in the battery module 10, there is no need to newly provide a structure for routing the temperature sensor harness 51, and the cost can be reduced.

In the present embodiment, the temperature sensor harness 51 and the voltage sensor harness 21 are connected to the same connector 22, and the connector 22 is connected to the controller-side harness 24 communicating with the controller 3 outside the housing 11.

In this configuration, since the temperature sensor harness 51 of the temperature sensor 50 for detecting the gas temperature is connected to the connector 22 existing in the battery module 10, there is no need to newly provide a connector for connecting the temperature sensor harness 51, and the cost can be reduced.

In addition, since the present embodiment includes the controller 3 that acquires a temperature rise value based on the temperature detected by the temperature sensor 50 and detects an occurrence of a thermal chain of the cells 14 based on the acquired temperature rise value, it is possible to detect the thermal chain of the cells 14 for each battery module 10 with a simple configuration.

Although the embodiment of the present invention and the modifications thereof have been described above, the embodiment and the modifications merely show a part of the application example of the present invention, and the technical scope of the present invention is not limited to the specific configuration of the embodiment.

In the present embodiment, the temperature sensor 50 is provided in the recessed part 144 formed by recessing the upper surface of the passage part 142 of the gas duct 20, but the temperature sensor 50 may be disposed on the upper surface of the passage part 142 without forming the recessed part 144. In addition, the temperature sensor 50 may be disposed on a side surface of the passage part 142.

In the present embodiment, the temperature sensor 50 is provided at the downstream end of the passage part 142, but the present invention is not limited thereto. The temperature sensor 50 may be disposed on a further downstream side in the gas flow direction, that is, the discharge part 143. In this case, a recessed part for disposing the temperature sensor 50 may be formed in the discharge part 143.

## Claims

1. A battery pack comprising:
a housing;
a battery module accommodated in the housing and implemented by stacking a plurality of cells;
a gas duct including a passage part disposed to cover an upper surface of the battery module, extending in a stacking direction, and configured to guide a gas in the stacking direction when the gas is generated from the cells, and a discharge part connected downstream of the passage part and configured to guide the gas to outside; and
a temperature sensor disposed at a downstream end of the passage part and configured to detect a temperature of the gas flowing in the discharge part.

2. The battery pack according to claim 1, wherein
the temperature sensor is disposed on an upper surface of the passage part.

3. The battery pack according to claim 2, wherein
the passage part has a recessed part recessed from the upper surface toward inside of the passage part, and
the temperature sensor is disposed in the recessed part.

4. The battery pack according to claim 1, further comprising:
a voltage sensor configured to detect a voltage of each of the cells, wherein
a voltage sensor harness connected to the voltage sensor is routed in the stacking direction along the gas duct, and
a temperature sensor harness connected to the temperature sensor is routed adjacent to the voltage sensor harness.

5. The battery pack according to claim 4, wherein
the temperature sensor harness and the voltage sensor harness are connected to a same connector, and
the connector is connected to a harness communicating with outside of the housing.

6. A control device for a battery pack, comprising:
the battery pack according to claim 1; and
a controller configured to acquire a temperature rise value based on a temperature detected by the temperature sensor and detect an occurrence of a thermal chain of the cells based on the acquired temperature rise value.
